# EUROPEAN PATENT SPECIFICATION

(11) **EP 1 135 890 B1**
(45) Date of publication and mention of the grant of the patent: **17.03.2010**
(21) Application number: 99973198.7
(22) Date of filing: 30.11.1999
(51) Int. Cl.: H04L 12/24, H04L 12/12, H04L 29/06, G06F 21/00

(54) **DATA PROCESSING SYSTEM AND METHOD FOR REMOTELY DISABLING NETWORK ACTIVITY IN A CLIENT COMPUTER SYSTEM**
DATENVERARBEITUNGSSYSTEM UND VERFAHREN ZUM FERNAUSSCHALTEN DER NETZWERKAKTIVITÄT IN EINEM KLIENTENRECHNERSYSTEM
SYSTEME DE TRAITEMENT DE DONNEES, ET PROCEDE PERMETTANT DE D'INVALIDER A DISTANCE L'ACTIVITE D'UN RESEAU DANS UN SYSTEME INFORMATIQUE DE CLIENT

(30) Priority: 30.11.1998 US 201063; 30.11.1998 US 201572; 30.11.1998 US 201062
(43) Date of publication of application: 26.09.2001
(73) Proprietor: Lenovo (Singapore) Pte. Ltd., Singapore 486048 (SG)
(72) Inventor: CROMER, Daryl, Carvis c/o IBM UK Ltd, Winchester, Hampshire SO21 2JN (GB); ELLISON, Brandon, Jon IBM UK Ltd., Winchester, Hampshire SQ21 2JN (GB); KERN, Eric, Richard, Durham, NC 27713 (US); LOCKER, Howard IBM UK Ltd,Intellect. proprty Law, Winchester, Hampshire SQ21 2JN (GB); SPRINGFIELD, Randall, Scott, Chapel Hill, NC 27516 (US)
(74) Representative: Schäfer, Horst
(86) International application number: PCT/GB1999/003982
(87) International publication number: WO 2000/033510

(56) References cited:
- EP-A- 0 378 804
- US-A- 4 652 874
- US-A- 5 404 544
- US-A- 5 652 892

## Description

### BACKGROUND OF THE INVENTION

### 1. Field of the Invention

The present invention relates in general to data processing systems and, in particular, to a data processing system and method including a server and client computer system coupled together utilizing a network. Still more particularly, the present invention relates to a data processing system and method including a server and client computer system coupled together utilizing a network for remotely disabling an ability of the client to access the network.

### 2. Description of the Related Art

The present invention is related to the subject matter of US-patent US 6,266,696 entitled "FULL TIME NETWORK AUXILIARY PROCESSOR FOR A NETWORK CONNECTED PC" published July 24, 2001.

Personal computer systems are well known in the art. They have attained widespread use for providing computer power to many segments of today's modern society. Personal computers (PCs) may be defined as a desktop, floor standing, or portable microcomputer that includes a system unit having a central processing unit (CPU) and associated volatile and non-volatile memory, including random access memory (RAM) and basic input/output system read only memory (BIOS ROM), a system monitor, a keyboard, one or more flexible diskette drives, a CD-ROM drive, a fixed disk storage drive (also known as a "hard drive"), a pointing device such as a mouse, and an optional network interface adapter. One of the distinguishing characteristics of these systems is the use of a motherboard or system planar to electrically connect these components together. Examples of such personal computer systems are IBM's PC series, Aptiva series, and Thinkpad series.

With PCs being increasingly connected into networks to allow transfers of data among computers to occur, more operations such as maintenance, updating of applications, and data collections are occurring over the network. Computer networks are also becoming essential to their user. It is desirable minimize loss of productivity by increasing availability of network resources. In today's network world, the availability and performance of the network is as important,as the availability and performance of the personal computer.

With the evolution from mainframe and dumb terminal to client-server networks, computing has created several issues for Information Services (IS) managers. In the mainframe/dumb terminal world, the communication path was from the terminal to the mainframe and then to other systems. In the client-server world, the client has the ability to send messages to and from other clients, as well as to the server.

One disadvantage of the client-server environment occurs when a client malfunctions. A malfunctioning client can disrupt the entire network by generating excessive network traffic. A hacker, software bus, or other system problem may cause the malfunction.

In the mainframe/dumb terminal environment, the IS manager could log-off the account and shut down the terminal, thus eliminating the excessive network traffic. In the client/server environment, the IS manager may send a request to the operating system of the client to stop sending messages. However, the operating system may or may not respond.

Therefore a need exists for a data processing system and method for a server computer system to remotely disable an ability of a client to access the network.

A method for detecting any attempted masquerade, wherein a user claims the name of another user when the real user is not connected to the LAN, is disclosed in document EP-A-0378804; in this case, the offending station is remotely disconnected from the network.

Moreover, the document US-A-5404544 describes a network providing a remote manager with the capability to enable or disable a LAN station remotely using a network command.

It is an object of the present invention to provide a technique which alleviates the above drawbacks.

According to the present invention a method in a data processing system is provided for permitting a server computer system to remotely disable an ability of a client computer system to access a network which couples the client computer system to the server computer system, wherein the client computer system includes a network adapter with a physical layer and a media access controller, the method comprising the step of the server computer system transmitting an indication to the physical layer utilising the network that the ability of the client computer system to access the network be at least temporarily disabled. The method further comprises the steps of receiving the indication directly from the physical layer in a logic module of the network adapter, and in response to a receipt of the indication the logic module temporarily isolating the media access controller from an operating system being executed by the client computer system, such that the operating system does not communicate with the media access controller when the media access controller is isolated, wherein the step of temporarily isolating the media access controller from the operating system includes isolating the media access controller from an internal bus of the client computer system, thereby at least temporarily disabling the ability of the client computer system to access the network, the client computer system being unable to transmit information utilising the network while the client computer system is temporarily disabled.

The indication my include a command field, the logic module temporarily disabling the ability of the client computer system to access the network according to the command field.

According to another aspect of the present invention, the method comprises the steps of receiving the indication directly from the physical layer in a logic module of the network adapter, and in response to a receipt of the indication the logic module generating a physical layer reset, the physical layer reset permanently disabling an ability of the physical layer to access the network, thereby at least temporarily disabling the ability of the client computer system to access the network, the client computer system being unable to transmit information utilising the network while the client computer system is temporarily disabled.

In this case, the indication may include a command field, the logic module permanently disabling the ability of the client computer system to access the network according to the command field.

According to one embodiment, the method further comprises the step of requiring a user to remove the physical layer reset prior to permitting a re-enabling the ability of the client computer system to access the network.

According to one embodiment, the method further comprises the steps of the server computer system transmitting an indication to the client computer system utilizing the network that the ability of the client computer system to access the network be re-enabled; and in response to a receipt of the indication by the client computer system, re-enabling the ability of the client computer system to access the network, the client computer system being able to transmit information utilising the network while the client computer system is re-enabled.

According to one embodiment, the step of re-enabling the ability of the client computer system to access the network further comprises the step of re-enabling the communication between the operating system and the media access controller included within the client computer system.

According to one embodiment, the method further comprises the steps of the server computer system transmitting an indication to.the client computer system utilizing the network that the ability of the client computer system to access the network be initialized; and in response to a receipt of the indication by the client computer system, initializing the ability of the client computer system to access the network.

According to one embodiment, the step of initializing the ability of the client computer system to access the network further comprises the step of initializing the media access controller included within the client computer system to access the network.

According to the invention, a data processing system for permitting a server computer system to remotely disable an ability of a client computer system to access a network which couples the client computer system to the server computer system is provided, wherein the client computer system includes a network adapter with a physical layer and a media access controller, the system comprising the server computer system executing code for transmitting an indication to the physical layer utilising the network that the ability of the client computer system to access the network be at least temporarily disabled, wherein the network adapter further includes a logic module for receiving the indication directly from the physical layer and isolating the media access controller from an operating system being executed by the client computer system, such that the operating system does not communicate with the media access controller when the media access controller is isolated, wherein the system comprises means for temporarily isolating the media access controller from the operating system including isolating the media access controller from an internal bus of the client computer system.

According to one embodiment, the indication includes a command field, the logic module comprises means for temporarily disabling the ability of the client computer system to access the network according to the command field.

According to another aspect of the invention, a data processing system for permitting a server computer system to remotely disable an ability of a client computer system to access a network which couples the client computer system to the server computer system is provided, wherein the client computer system includes a network adapter with a physical layer and a media access controller, the system comprising the server computer system executing code for transmitting an indication to the physical layer utilising the network that the ability of the client computer system to access the network be at least temporarily disabled, wherein the network adapter further includes a logic module for receiving the indication directly from the physical layer and isolating the media access controller from an operating system being executed by the client computer system, such that the operating system does not communicate with the media access controller when the media access controller is isolated, wherein the system comprises means for generating a physical layer reset, the physical layer reset permanently disabling an ability of the physical layer to access the network, thereby at least temporarily disabling the ability of the client computer system to access the network, the client computer system being unable to transmit information utilising the network while the client computer system is temporarily disabled.

According to one embodiment, the indication includes a command field, the logic module comprises means for permanently disabling the ability of the client computer system to access the network according to the command field.

According to one embodiment, the network hardware is configured to require a user to remove the physical layer reset prior to re-enabling communication between the client computer operating system and the network hardware.

According to one embodiment, the system further comprises means for transmitting an indication to the client computer system utilizing the network that the ability of the client computer system to access the network be re-enabled; and means for in response to a receipt of the indication by the client computer system, re-enabling the ability of the client computer system to access the network, the client computer system being able to transmit information utilizing the network while the client computer system is re-enabled.

According to one embodiment, the client computer system comprises means for re-enabling communication between the media access controller included within the client computer system and the operating system.

According to one embodiment, the system comprises means for transmitting an indication to the client computer system utilizing the network that the ability of the client computer system to access the network be initialized and means for in response to a receipt of the initialization indication by the client computer system, initializing the ability of the client computer system to access the network.

According to one embodiment, the system comprises means for initializing the media access controller included within the client computer system to access the network.

According to one embodiment, the indication is a data packet including command extensions in a network packet and the network hardware further includes a logic module for receiving the command extensions directly from the physical layer, the logic module being configured to in response to a receipt of the indication temporarily isolating the media access controller from the client computer operating system, such that the client computer operating system does not communicate with the media access controller when the media access controller is isolated.

According to one embodiment, the indication is a data packet including command extensions in a network packet and the network hardware further includes a logic module for receiving the command extensions directly from the physical layer, the logic module being configured to in response to a receipt of the indication generating a physical layer reset, the physical layer reset permanently disabling an ability of the physical layer to access the network.

According to one embodiment, the client computer system includes a power supply which has means for supplying full normal system power, and has an auxiliary power main which has means for supplying full time power to power management logic and to the network hardware, whereby the client computer system has the ability to respond to a wakeup signal from the network hardware, in response to which the power supply is turned on and the client computer system powered up.

### BRIEF DESCRIPTION OF THE DRAWINGS

The novel features are set forth in the appended claims. The present invention itself, however, as well as a preferred mode of use, further objectives, and advantages thereof, will best be understood by reference to the following detailed description of a preferred embodiment when read in conjunction with the accompanying drawings, wherein:
FIG. 1 illustrates a pictorial representation of a data processing system including a plurality of client computer systems coupled to a server computer system utilizing a network and a hub in accordance with the method and system of the present invention;
FIG. 2 and FIG. 2B depict a pictorial representation of a network adapter included within a client computer system in accordance with the method and system of the present invention;
FIG. 3 illustrates a pictorial representation of a special purpose processing unit which is included within a network adapter included within a client computer system in accordance with the method and system of the present invention;
FIG. 4 illustrates a pictorial representation of a network packet, including a network header and a data packet, which may be transmitted by a server computer system over the network in accordance with the method and system of the present invention;
FIG. 5 depicts a high level flow chart which illustrates a server computer system transmitting an indication to a client computer system which disables/re-enables an ability of the client computer system to access a network in accordance with the method and system of the present invention; and
FIG. 6 illustrates a high level flow chart which depicts a client computer system receiving an indication from a server computer system to disable/re-enable the ability of the client computer system to access the network in accordance with the present invention.

### DETAILED DESCRIPTION OF A PREFERRED EMBODIMENT

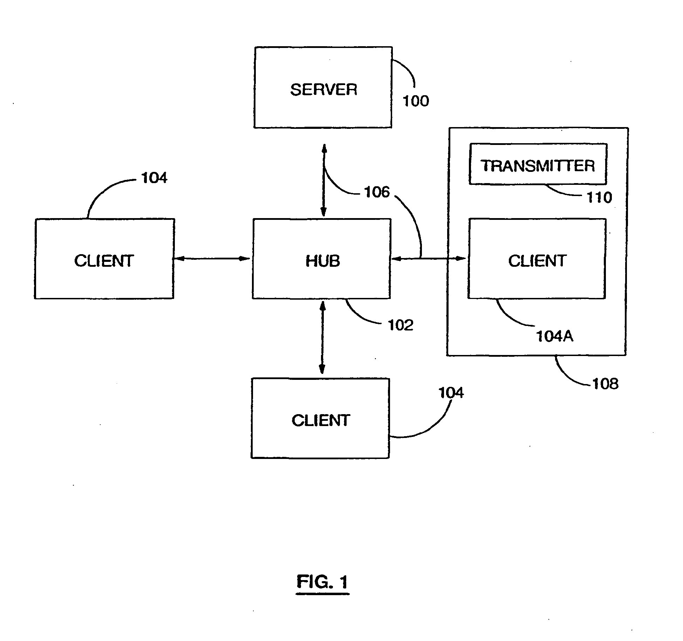

A preferred embodiment of the present invention and its advantages are better understood by referring to FIGS. 1-6 of the drawings, like numerals being used for like and corresponding parts of the accompanying drawings.

The present invention is a method and system for permitting a server computer system coupled to a client computer system utilizing a network to remotely disable or re-enable an ability of the client computer system to access the network.

The ability of the client to access the network may be disabled using one of two methods described below. However, those skilled in the art will recognize that other methods for implementing the claims may be utilized. The first method described permits a server to remotely disable the client's network access ability temporarily. The second method permits a server to remotely disable the ability permanently.

The client computer system includes a media access controller, which is an Ethernet controller in a preferred embodiment. The media access controller (MAC) couples the client computer system to the network. The client computer system utilizes the MAC to send and receive network packets. When the server transmits an indication to the client to temporarily disable the ability of the client to access the network, a management application specific integrated circuit (ASIC) included within the client receives the packet from the MAC which received the packet from the network. In response to a receipt of this packet, the ASIC isolates the MAC from the PCI bus of the client. Since the operating system communicates with the MAC utilizing the PCI bus, the operating system of the client cannot send or receive network packets.

However, while the MAC is isolated from the PCI bus, the MAC will continue to receive network packets from the network. The MAC will continue to forward management network packets received from the network to the ASIC. The MAC will ignore data network packets. Therefore, the server may subsequently transmit an indication to the client to reenable the ability of the client to access the network. When this indication is received, the ASIC will transmit a signal to the MAC which will re-enable the,coupling of the MAC to the PCI bus. The client may then again access the network by sending or receiving network packets.

It may become necessary to hold the client in a physical reset mode in order to permanently remove the client from the network. This is accomplished by the server transmitting an indication to the client to permanently disable the ability of the client to access the network. In response to a receipt of a network packet including such an indication, the ASIC will generate a physical reset signal which it transmits to the physical layer. In response to a receipt of this signal by the physical layer, the client's ability to access the network is permanently disabled. In this manner, the MAC will not receive and may not transmit any network packets. After the client has been permanently disabled from accessing the network, a user must re-enable the physical layer by resetting the client computer system and entering the appropriate password in order to restore the client's ability to access the network.

The present invention permits a server to modify the operation of a client's network hardware in order to disable/re-enable the client's ability to access the network. The client's operating system and other software are prohibited from gaining any access to the network while the ability to access the network is disabled.

FIG. 1 illustrates a pictorial representation of a data processing system including a plurality of client computer systems 10'4 coupled to a server computer system 100 utilizing a hub 102 in accordance with the method and system of the present invention. Server computer system 100 is connected to a hub 102 utilizing a local area network (LAN) connector bus 106. Respective client systems 104 also connect to hub 102 through respective LAN busses 106. The preferred form of the network conforms to the Ethernet specification and uses such hubs. It will be appreciated, however, that other forms of networks, such as token ring, may be utilized to implement the invention.

A "network" may include any type of data communications channel, such as an Ethernet network, token ring, or X.10 or X.25. Those skilled in the art will recognize that the invention described herein may be implemented utilizing any type of data communications channel. However, the preferred embodiment is implemented utilizing an Ethernet network.

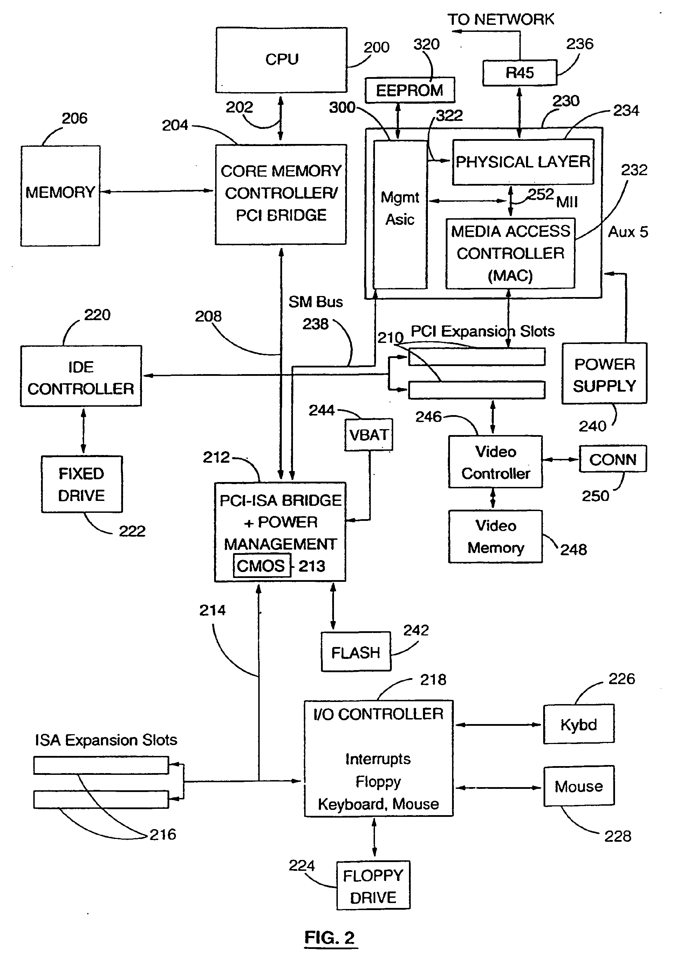

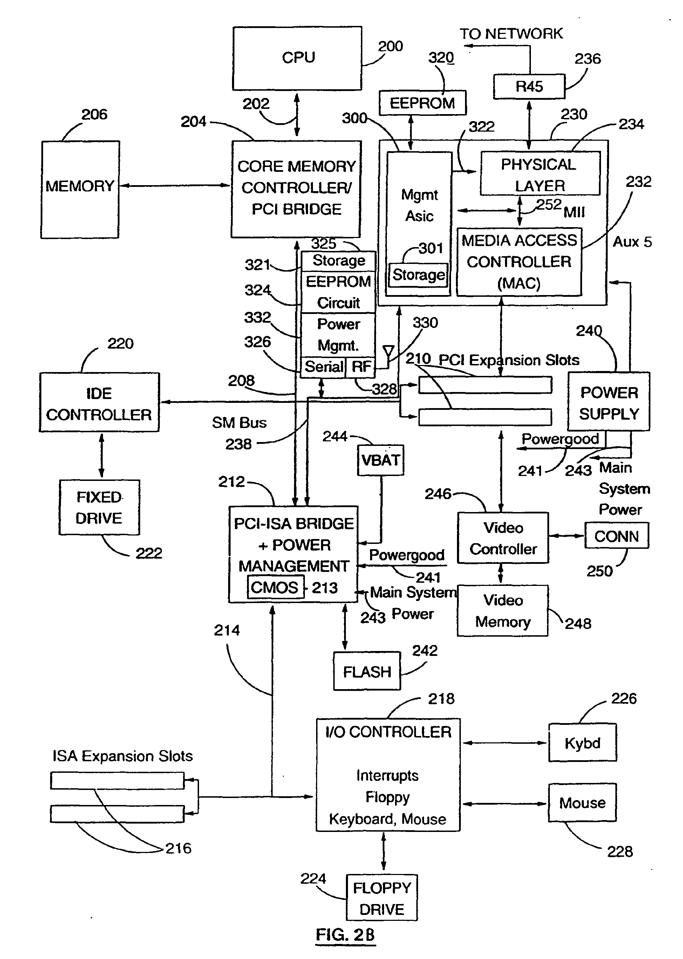

FIG. 2 illustrates a pictorial representation of a network adapter 230 included within a client computer system in accordance with the method and system of the present invention. A central processing unit (CPU) 200 is connected by address, control, and data busses 202 to a memory controller and peripheral component interconnect (PCI) bus bridge 204 which is coupled to system memory 206. An integrated drive electronics (IDE) device controller 220, and a PCI bus to Industry Standard Architecture (ISA) bus bridge 212 are connected to PCI bus bridge 204 utilizing PCI bus 208. IDE controller 220 provides for the attachment of IDE compatible storage devices such as fixed disk drive 222. PCI/ISA bridge 212 provides an interface between PCI bus 208 and an optional feature or expansion bus such as the ISA bus 214. PCI/ISA bridge 212 includes power management logic. A PCI standard expansion bus with connector slots 210 is coupled to PCI bridge 204. PCI connector slots 210 may receive PCI bus compatible peripheral cards. An ISA standard expansion bus with connector slots 216 is connected to PCI/ISA bridge 212. ISA connector slots 216 may receive ISA compatible adapter cards (not shown). It will be appreciated that other expansion bus types may be used to permit expansion of the system with added devices. It should also be appreciated that two expansion busses are not required to implement the present invention.

An I/O controller 218 is coupled to PCI-ISA bridge controller 212. I/O controller 218 controls communication between PCI-ISA bridge controller 212 and devices and peripherals such as floppy drive 224, keyboard 226, and mouse 228 so that these devices may communicate with CPU 200.

PCI-ISA bridge controller 212 includes an interface for a flash memory 242 which includes microcode which client 104 executes upon power-on. Flash memory 242 is an electrically erasable programmable read only memory (EEPROM) module and includes BIOS that is used to interface between the I/O devices and operating system. PCI-ISA bridge controller 214 also includes CMOS storage 213 that holds initialization settings which represents system configuration data. Storage 213 includes values which describe the present configuration of client 104. For example, storage 213 includes information describing the list of initial program load (IPL) devices set by a user and the sequence to be used for a particular power method, the type of display, the amount of memory, time date, etc. Furthermore, this data is stored in storage 213 whenever a special configuration program, such as configuration/setup is executed. PCI-ISA bridge controller 204 is supplied power from battery 244 to prevent loss of configuration data in storage 213.

Client system 104 includes a video controller 246 which may, for example, be plugged into one of connector slots 210. Video controller 246 is connected to video memory 248.

The image in video memory 248 is read by controller 246 and displayed on a monitor (not shown) which is connected to client 104 through connector 250.

A client system 104 includes a network adapter 230 which may, for example, be plugged into one of the PCI connector slots 210 (as illustrated) or one of the ISA connector slots 216 in order to permit client 104 to communicate with a LAN via connector 236 to hub 102.

Client computer system 104 includes a special power supply 240 which supplies full normal system power, and has an auxiliary power main AUX 5 which supplies full time power to the power management logic 212 and to the network adapter 230. This enables client 104 to respond to a wakeup signal from network adapter 230. In response to a receipt of the wakeup signal, power supply 240 is turned on and then powers up client 104. Network adapter 230 includes a physical layer 234 and a media access controller (MAC) 232 connected together utilizing a Media Independent Interface (MII) bus 252. The MII bus 252 is a specification of signals and protocols which define the interfacing of a 10/100 Mbps Ethernet Media Access Controller (MAC) 232 to the underlying physical layer 234.

MAC 232 processes digital network signals, and serves as an interface between a shared data path, i.e. the MII bus 252, and the PCI bus 208. MAC 232 performs a number of functions in the transmission and reception of data packets.

For example, during the transmission of data, MAC 232 assembles the data to be transmitted into a packet with address and error detection fields. Conversely, during the reception of a packet, MAC 232 disassembles the packet and performs address checking and error detection. In addition, MAC 232 typically performs encoding/decoding of digital signals transmitted over the shared path and performs preamble generation/removal, as well as bit transmission/reception. In a preferred embodiment, MAC 232 is an Intel 82557 chip. However, those skilled in the art will recognize that the functional blocks depicted in network adapter 230 may be manufactured utilizing a single piece of silicon.

Physical layer 234 conditions analog signals to go out to the network via an R45 connector 236. Physical layer 234 may be a fully integrated device supporting 10 and 100 Mb/s CSMA/CD Ethernet applications. Physical layer 234 receives parallel data from the MII local bus 252 and converts it to serial data for transmission through connector 236 and over the network. Physical layer 234 is also responsible for wave shaping and provides analog voltages to the network.

In a preferred embodiment, physical layer 234 is implemented utilizing an Integrated Services chip ICS-1890.

Physical layer 234 includes auto-negotiation logic that serves three primary purposes. First, it determines the capabilities of client computer 104. Second, it advertises its own capabilities to server computer 100. Third, it establishes a connection with server computer 100 using the highest performance connection technology.

Network adapter 230 includes a logic module 300 coupled to the MII bus 252 between physical layer 234 and MAC 232. Logic module 300 may be a "hard wired" application specific integrated circuit (ASIC) or a programmed general-purpose processor which is programmed as more fully described below. By coupling ASIC 300 to the MII bus 252, ASIC 300 may send and receive network packets using physical layer 234.

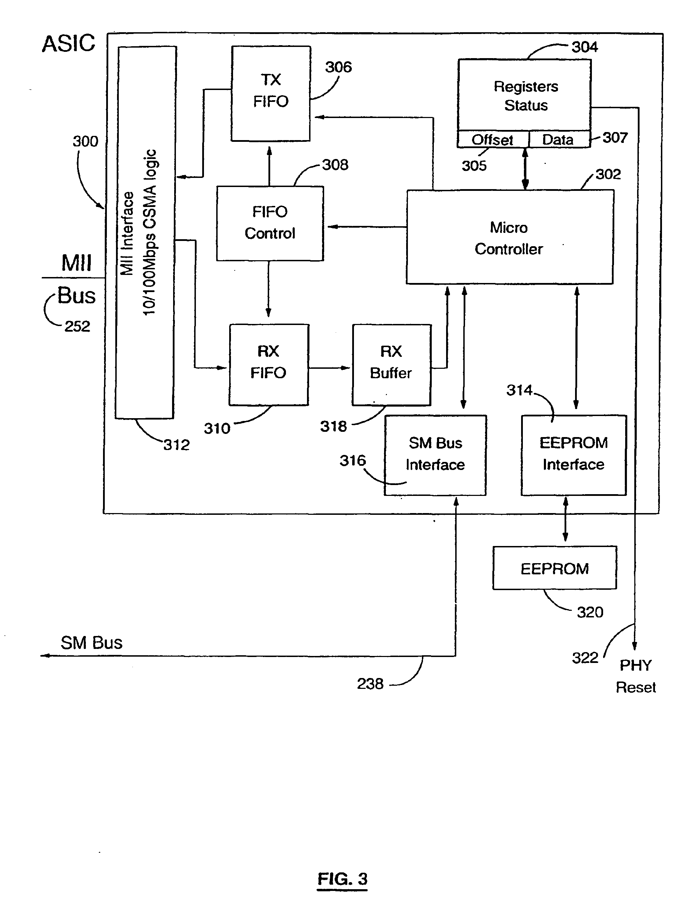

Data from client computer system 104 is accessed by ASIC 300 over a system management bus (SM) 238. System management bus 238 is a two-wire low speed serial bus used to interconnect management and monitoring devices. With the trickle power supplied by signal AUX 5 from power supply 240, ASIC 300 is preferably powered full time. Micro-controller 302 (shown in FIG. 3) included within ASIC 300 is coupled to bridge controller 212 via the System Management (SM) bus 238 through SM bus interface 316. This provides a path to allow software running on client 104 to access ASIC and EEPROM 320.

FIG. 3 illustrates a pictorial representation of a special purpose processing unit 300 which is included within a network adapter 230 included within a client computer system 104 in accordance with the method and system of the present invention. The special purpose processing unit is preferably implemented utilizing ASIC 300 which includes a micro-controller 302 which includes several state machines to handle the following tasks: packet reception, SM bus interface, and EEPROM updates. Micro-controller 302 sends commands to FIFO control 308 to control data flow from TX FIFO 306, RX FIFO 310, and RX Bluffer 318. Micro-controller 302 also responds to SM bus requests from software running on client 104 to access register status 304 or access EEPROM 320. Signals are received from the MII bus 252 by interface unit 312 and passed to RX FIFO 310.

Micro-controller 302 accesses EEPROM 320 through EEPROM interface 314 to obtain values to create network packets such as source and destination MAC addresses, IP protocol information, authentication headers, and Universal Data Packet headers. Further, EEPROM 320 retains the Universal Unique Identifier (UUID).

Micro-controler 302 drives PHY reset 322 line to physical layer 234 through registers/status 304. Micro-controller 302, therefore, has the ability to place the physical layer 234 in a reset state, based on management packets, which will result in the physical layer dropping the connection to the network.

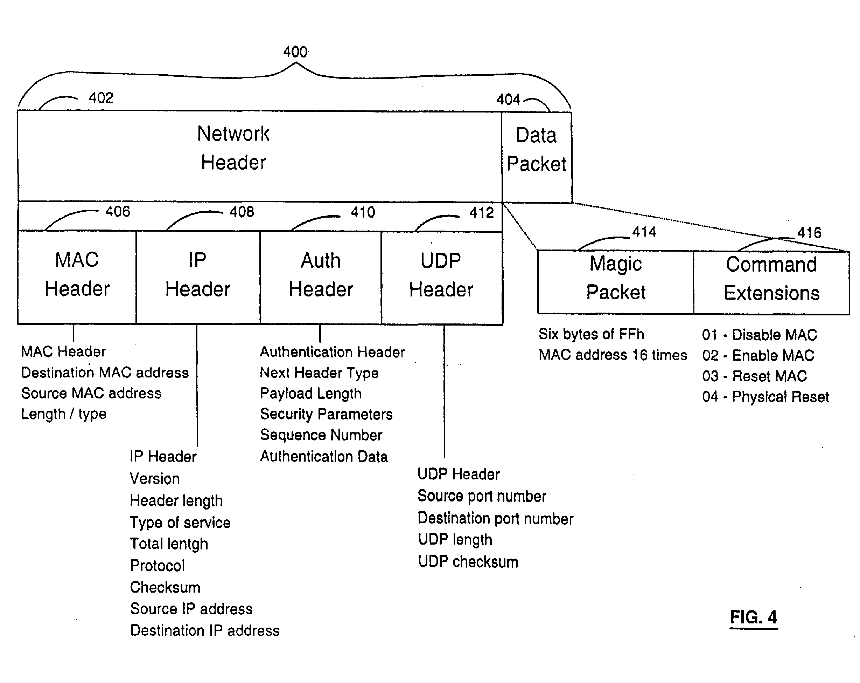

FIG. 4 illustrates a pictorial representation of a network packet 400, including a network header 402 and a data packet 404, which may be transmitted by a server computer system over the network in accordance with the method and system of the present invention. Each network packet 400 includes a network header 402 and a data packet 404.

Network header 402 includes a MAC header 406, IP header 408, authentication header 410, and UDP header 412 which are all known in the art to provide addresses, identifiers, and other information for assuring correct transfer of the packet. Data packet 404 includes the information content to be transferred.

Data packet 404 includes a magic packet 414 and command extensions 416. The content of Magic packet 414 is six bytes of "FF" followed by 12 copies of client MAC addresses. Magic packet 414 is a specialized type of packet. Magic packet 414 is a management packet which does not include standard network data. When magic packet 414 is detected utilizing the six bytes of "FF", MAC 232 will ignore magic packet 414.

Data packet 404 also may include command extensions 416. Server computer system 100 may specify one of a plurality of command extensions in data packet 404 in order to cause ASIC 300 to modify the network activity of client 104.

When a network packet 400 is received by client 104, it is received by physical layer 234 and placed on the MII bus 252. When network packet 400 includes magic packet 414, MAC 232 detects that it includes magic packet 414, and then MAC 232 ignores any command extensions 416.

ASIC 300 also receives network packet 400 utilizing the MII interface 312. Data packet 404 is transferred to RX FIFO 310 and then to RX buffer 318. Micro-controller 302 then inspects data packet 404 and determines whether data packet 404 includes command extensions 416. If command extensions 416 are included, the appropriate function is executed in accordance with the description which follows.

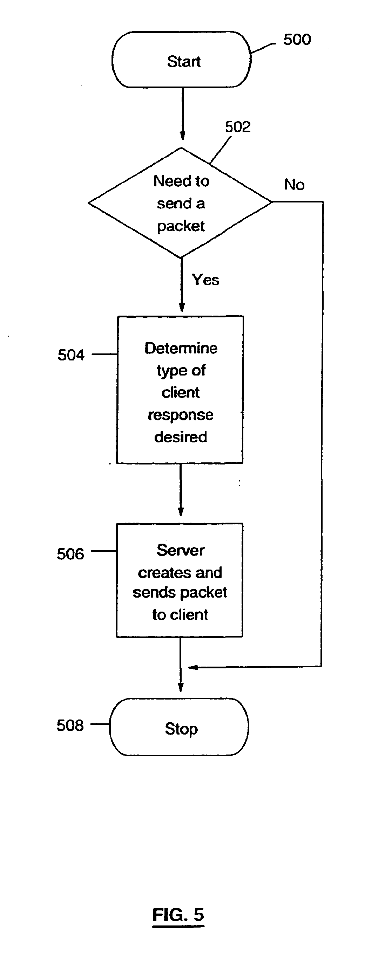

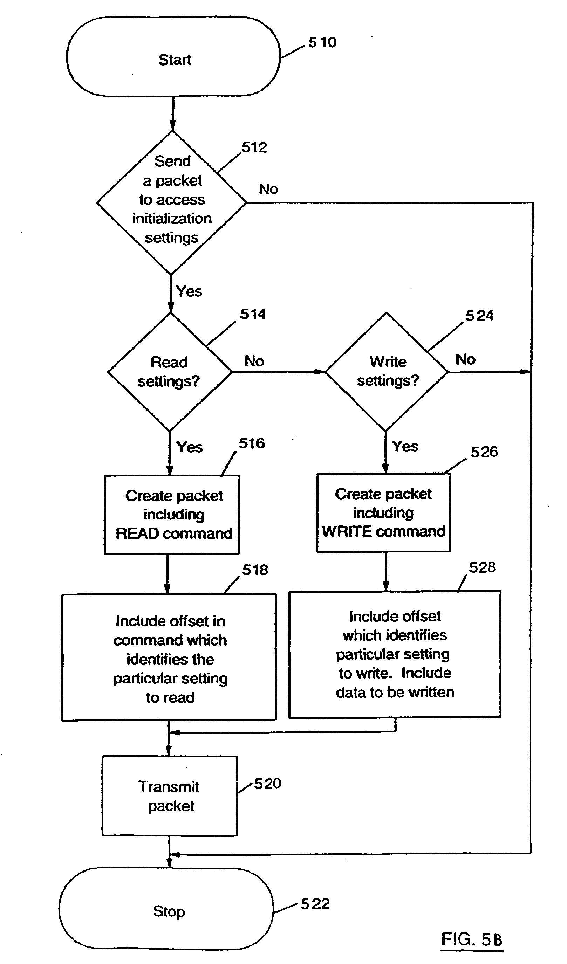

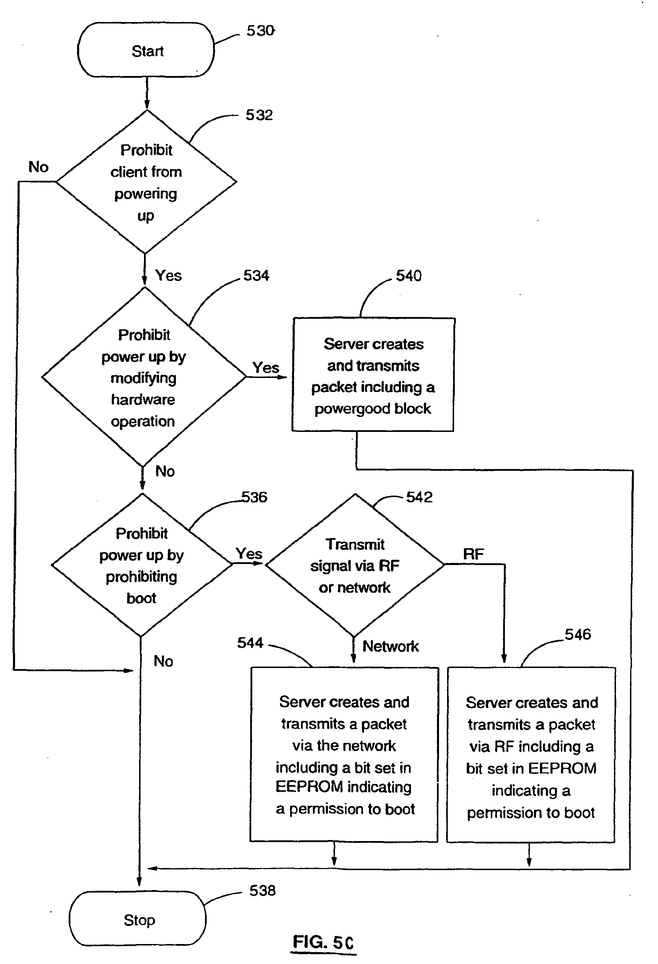

FIG. 5 depicts a high level flow chart which illustrates a server computer system transmitting an indication to a client computer system which disables/reenables an ability of the client computer system to access a network in accordance with the method and system of the present invention. The process starts as depicted by block 500 and thereafter passes to block 502 which illustrates a determination of whether or not the server will transmit an indication to a client to remotely disable the client from accessing the network. If a determination is made that the server will not transmit such packet, the process terminates as depicted by block 508.

Referring again to block 502, if a determination is made that the server will transmit an indication to a client, the process passes to block 504 which illustrates a determination of a type of client response desired in response to a receipt of the packet. For example, the types of client responses may include disabling the client from accessing the network, re-enabling the client to access the network, initializing the network controller included within the client, or holding the physical layer of the client in a physical reset, thus permanently disabling the client from accessing the network. Next, block 506 depicts the server creating and transmitting the packet to the client computer system. The process then terminates as illustrated by block 508.

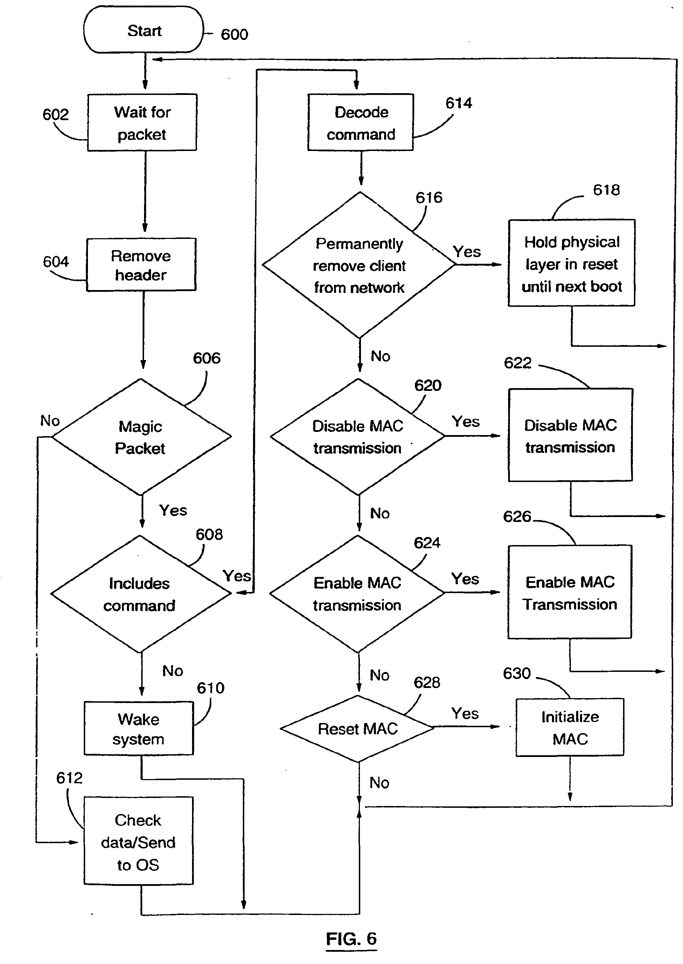

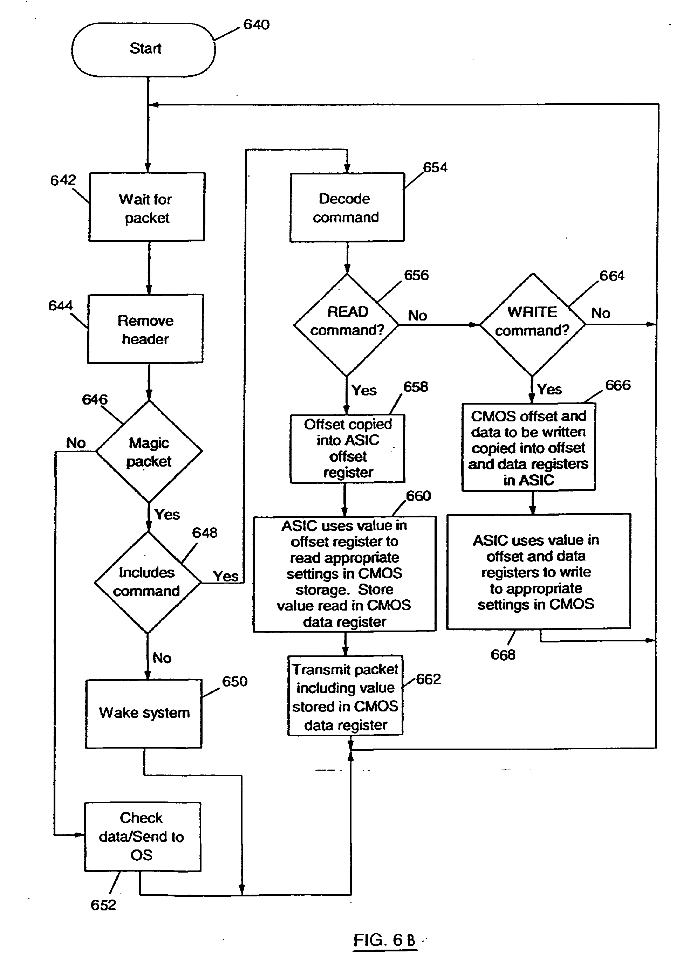

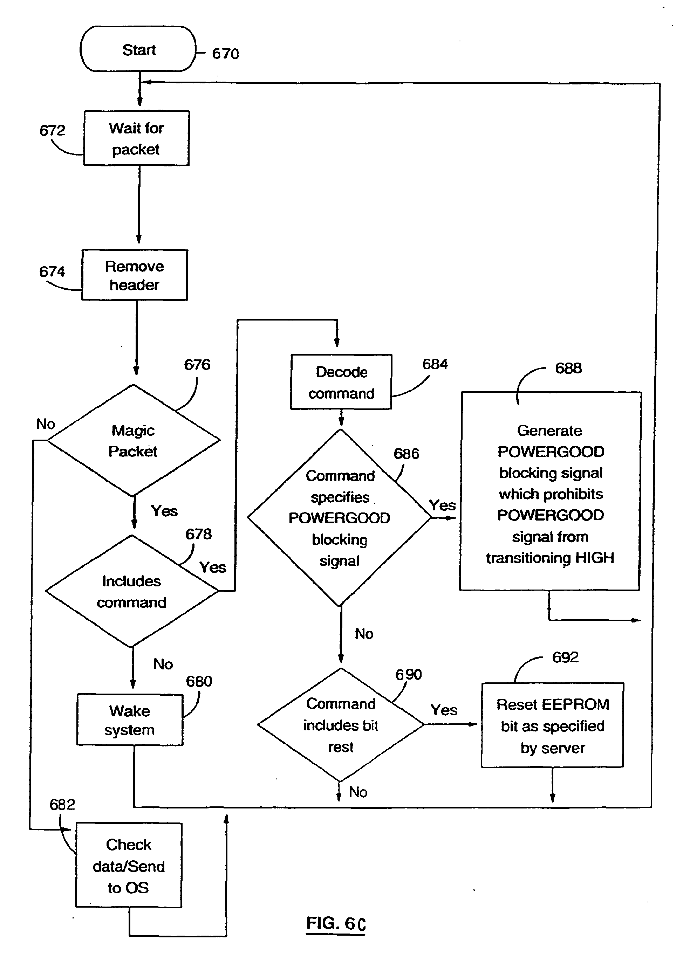

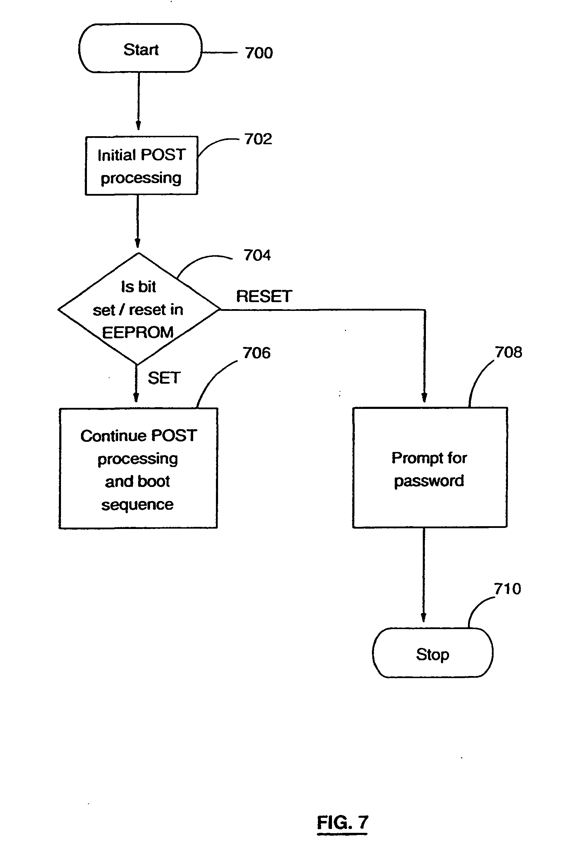

FIG. 6 illustrates a high level flow chart which depicts a client computer system receiving an indication from a server computer system to disable/re-enable the ability of the client computer system to access the network in accordance with the present invention. The process starts as depicted by block 600 and thereafter passes to block 602 which illustrates a micro-controller 302 included within a client computer system waiting to receive network packet 400. When the packet has been received, physical layer 234 places data packet 404 included within network packet 400 on the MII bus 252. The MII bus 252 is read by MII interface 312 of ASIC 300. ASIC 300 transfers data packet 404 from MII interface 312 to RX FIFO 310 and to RX buffer 318.

The process then passes to block 604 which depicts micro-controller 302 removing network header 402 from the packet. Next, block 606 illustrates a determination by micro-controller 302 whether data packet 404 included magic packet 414. If a determination is made that data packet 404 did not include magic packet 414, the process passes to block 612 which depicts the data included within data packet 404 being sent to the operating system (OS). The process then passes back to block 602.

Referring again to block 606, if a determination is made that data packet 404 did include magic packet 414, the process passes to block 608 which illustrates a determination of whether or not data packet 404 also included additional commands 416. If a determination is made that data packet 404 does not include any additional commands 416, the process passes to block 610 which depicts the transmission of a wakeup command which will cause the client to power up. The process then passes back to block 602.

Referring again to block 608, if a determination is made that data packet 404 does include additional commands 416, the process passes to block 614 which depicts the decoding of the additional commands 416. Next, block 616 illustrates a determination of whether or not the command is an indication that the ability of the client computer system to access the network should be permanently disabled. If a determination is made that the command is an indication that the ability of the client computer system to access the network should be permanently disabled, the process passes to block 618 which depicts physical layer reset signal 322 being activated so that physical layer 234 is held in reset until the next boot of the system. The process then passes back to block 602.

Referring again to block 616, if a determination is made that the command is not an indication that the ability of the client computer system to access the network should be permanently disabled, the process passes to block 620 which illustrates a determination of whether or not the command is an indication that network transmissions from MAC 232 should be disabled. If a determination is made that the command is an indication that MAC 232 network transmissions should be disabled, the process passes to block 622 which depicts the disabling of network transmissions from MAC 232. Disabling network transmissions of MAC 232 will temporarily isolate MAC 232 from PCI bus 208. Isolation refers to preventing MAC 232 from accepting packets from PCI bus 208 of sending packets to PCI bus 208. Those skilled in the art will appreciate that one of many different mechanisms may be utilized to isolate MAC 232 from PCI bus 208.

Therefore, network traffic will be received by MAC 232 but will not be placed on PCI bus 208. The operating system will not receive any network packets. Also, any network traffic that client computer system 104 attempts to generate will not be able to reach MAC 232. Thus, network traffic will not be forwarded by MAC 232 to the rest of client 104, and will not be generated by MAC 232 or transmitted to the network. Client computer system 104 will not be able to generate any network traffic. The process then passes to block 602.

Referring again to block 620, if a determination is made that the command is not an indication that network transmissions from MAC 232 should be disabled, the process passes to block 624 which depicts a determination of whether or not the command is an indication that the network transmissions of MAC 232 should be enabled or re-enabled. Because MAC 232 is still receiving packets when it is isolated from PCI bus 208, MAC 232 will be able to receive an indication, included within a network packet, from server computer system 100 that MAC 232 should be re-enabled. If a determination is made that MAC transmission are to be re-enabled, the process passes to block 826 which illustrates the re-enablement of MAC transmissions. MAC transmissions are re-enabled by re-enabling the communication between the operating system and MAC 232 utilizing PCI bus 208. The process then passes back to block 602.

Referring again to block 624, if a determination is made that the command is not an indication that network transmissions from MAC 232 should be re-enabled, the process passes to block 628 which depicts a determination of whether or not the command is an indication that MAC 232 should be initialized. When MAC 232 is initialized, it is reset to a known operating condition. If a determination is made that the command is an indication that MAC 232 should be initialized, the process passes to block 630 which illustrates the initialization of MAC 232. MAC 232 may be initialized by a device driver resetting and initializing a session. The process then passes back to block 602.

The present invention provides a server computer system with the ability to remotely disable/re-enable the ability of the client computer system to access the network. Unless the ability has been permanently disabled, the client remains active and remains able to accept commands from the server. In this manner, the server has control of network access by the client.

The present invention recognizes that certain network errors that produce disruptive activity must be terminated immediately without regard to the operation of the client. In these situations, the server may cause the ability of the client to access the network to be permanently disabled.

In both cases, temporary and permanent disablement, the server is able to modify the ability of the client to access the network without an intervention of the client's operation system or application software.

## Claims

1. A method in a data processing system for permitting a server computer system (100) to remotely disable an ability of a client computer system (104) to access a network (103, 106) which couples the client computer system to the server computer system, wherein the client computer system includes a network adapter (230) with a physical layer (234) and a media access controller (232), the method comprising the step of the server computer system transmitting (500-508) an indication to the physical layer utilising the network that the ability of the client computer system to access the network be at least temporarily disabled, and being **characterised by** the steps of:
- receiving (600-604) the indication directly from the physical layer in a logic module (300) of the network adapter, and
- in response to a receipt of the indication the logic module temporarily isolating (622) the media access controller from an operating system being executed by the client computer system, such that the operating system does not communicate with the media access controller when the media access constroller is isolated, wherein the step of temporarily isolating (622) the media access controller (232) from the operating system includes isolating the media access controller from an internal bus (208) of the client computer system (104),
thereby at least temporarily disabling the ability of the client computer system to access the network, the client computer system being unable to transmit information utilising the network while the client computer system is temporarily disabled.

2. The method according to claim 1, wherein the indication includes a command field (416), the logic module temporarily disabling (622) the ability of the client computer system to access the network according to the command field (620, 616).

3. A method in a data processing system for permitting a server computer system (100) to remotely disable an ability of a client computer system (104) to access a network (103, 106) which couples the client computer system to the server computer system, wherein the client computer system includes a network adapter (230) with a physical layer (234) and a media access controller (232), the method comprising the step of the server computer system transmitting (500-508) an indication to the physical layer utilising the network that the ability of the client computer system to access the network be at least temporarily disabled, and being **characterised by** the steps of:
- receiving (600-604) the indication directly from the physical layer in a logic module (300) of the network adapter, and
- in response to a receipt of the indication the logic module generating (618) a physical layer reset, the physical layer reset permanently disabling an'ability of the physical layer to access the network,
thereby at least temporarily disabling the ability of the client, computer system to access the network, the client computer system being unable to transmit information utilising the network while the client computer system is temporarily disabled.

4. The method according to claim 3, wherein the indication includes a command field (416), the logic module permanently disabling (618) the ability of the client computer system to access the network according to the command field (620, 616).

5. The method according to claim 3 or 4, further comprising the step of requiring a user to remove the physical layer reset prior to permitting a re-enabling the ability of the client computer system to access the network.

6. The method according to any of claims 1 or 5, further comprising the steps of:
- the server computer system transmitting (500-508) an indication to the client computer system utilizing the network that the ability of the client computer system to access the network be re-enabled; and,
- in response to a receipt of the indication by the client computer system, re-enabling (626) the ability of the client computer system to access, the network, the client computer system being able to transmit information utilising the network while the client computer system is re-enabled.

7. The method according to claim 6, wherein the step of re-enabling (626) the ability of the client computer system to access the network further comprises the step of re-enabling the communication between the operating system and the media access controller included within the client computer system.

8. The method according to claim 7, further comprising the steps of:
- the server computer system transmitting (500-508) an indication to the client computer system utilizing the network that the ability of the client computer system to access the network be initialized; and
- in response to a receipt of the indication by the client computer system, initializing (630) the ability of the client computer system to access the network.

9. The method according to claim 8, wherein the step of initializing (630) the ability of the client computer system to access the network further comprises the step of initializing the media access controller (232) included within the client computer system to access the network.'

10. A data processing system for permitting a server computer system (100) to remotely disable an ability of a client computer system (104) to access a network (102, 106) which couples the client computer system to the server computer system, wherein the client computer system includes a network adapter (230) with a physical layer (234) and a media access controller (232), the system comprising the server computer system executing code (500-508) for transmitting an indication to the physical layer utilising the network that the ability of the client computer system to access the network be at least temporarily disabled, wherein the network adapter further includes a logic module (300) for receiving the indication directly from the physical layer and isolating the media access controller from an operating system being executed by the client computer system, such that the operating system does not communicate with the media access controller when the media access controller is isolated, wherein the system comprises means for temporarily isolating (622) the media access controller (232) from the operating system including isolating the media access controller from an internal bus (208) of the client computer system (104).

11. The system according to claim 10, wherein the indication includes a command field (416), the logic module comprises means for temporarily disabling (622) the ability of the client computer system to access the network according to the command field (620, 616).

12. A data processing system for permitting a server computer system (100) to remotely disable an ability of a client computer system (104) to access a network (102, 106) which couples the client computer system to the server computer system, wherein the client computer system includes a network adapter (230) with a physical layer (234) and a media access controller (232), the system comprising the server computer system executing code (500-508) for transmitting an indication to the physical layer utilising the network that the ability of the client computer system to access the network be at least temporarily disabled, wherein the network adapter further includes a logic module (300) for receiving the indication directly from the physical layer and isolating the media access controller from an operating system being executed by the client computer system, such that the operating system does not communicate with the media access controller when the media access controller is isolated, wherein the system comprises means for generating a physical layer reset, the physical layer reset permanently disabling an ability of the physical layer to access the network, thereby at least temporarily disabling the ability of the client computer system to access the network, the client computer system being unable to transmit information utilising the network while the client computer system is temporarily disabled.

13. The system according to claim 12, wherein the indication includes a command field (416), the logic module comprises means for permanently disabling (618) the ability of the client computer system to access the network according to the command field (620, 616).

14. The system according to claim 12 or 13, wherein the network adapter (230) is configured to require a user to remove the physical layer reset (618) prior to re-enabling communication between the client computer operating system and the network (102,106).

15. The system according to any of claims 10 to 14, further comprising:
- means for transmitting an indication to the client computer system (104) utilizing the network (102, 106) that the ability of the client computer system to access the network be re-enabled; and
- means for in response to a receipt of the indication by the client computer system, re-enabling the ability of the client computer system to access the network, the client computer system being able to transmit information utilizing the network while the client computer system is re-enabled.

16. The system according to claim 15, wherein the client computer system comprises means for re-enabling communication between the media access controller included within the client computer system and the operating system.

17. The system according to any of claims 10 to 16, wherein the server computer system comprises
- means for transmitting (500-508) an indication (404,416) to the client computer system (104) utilizing the network (102,106) that the ability of the client computer system to access the network be initialized and
- means for in response to a receipt of the initialization indication by the client computer system, initializing (630) the ability of the client computer system to access the network.

18. The system according to claim 17, wherein the server computer system comprises means for initializing the media access controller (232) included within the client computer system to access the network.

19. The system according to any of claims 15 to 18, wherein:
i) the indication is a data packet (404) including command extensions (416) in a network packet (400);
ii) the network adapter (230) further includes a logic module (300) for receiving the command extensions directly from the physical layer (234), the logic module being configured to in response to a receipt of the indication temporarily isolating the media access controller (232) from the client computer operating system (104), such that the client computer operating system does not communicate with the media access controller when the media access controller is isolated.

20. The system according to any of claims 15 to 18, wherein:
i) the indication is a data packet (404) including command extensions (416) in a network packet (400);
ii) the network adapter (230) further includes a logic module (300) for receiving the command extensions directly from the physical layer (234), the logic module being configured to in response to a receipt of the indication generating a physical layer reset, the physical layer reset permanently disabling an ability of the physical layer to access the network (102,106).

21. The system according to any of claims 10 to 20, wherein the client computer system (104) includes a power supply (240) which has means for supplying full normal system power, and has an auxiliary power main (AUX 5) which has means for supplying full time power to power management logic (212) and to the network adapter (230); whereby the client computer system has the ability to respond to a wakeup signal from the network in response to which the power supply is turned on and the client computer system powered up.

22. A client computer system (104) for use in a data processing system as claimed in any of claims 10 to 21.

23. Network adapter (230) for use in a client computer system (104) as claimed in claim 22.

## Patentansprüche

1. Verfahren in einem Datenverarbeitungssystem, um es einem Servercomputersystem (100) zu ermöglichen, von ferne die Befähigung eines Clientcomputersystems (104) zu deaktivieren, auf ein Netzwerk (103, 106) zuzugreifen, das das Clientcomputersystem mit dem Servercomputersystem verbindet, wobei das Clientcomputersystem einen Netzwerkadapter (230) umfasst mit einer physikalischen Schicht (234) und einem Mediaaccesscontroller (232), wobei das Verfahren den Schritt des Übermittelns (500-508) einer Meldung an die physikalische Schicht durch das Servercomputersystem unter Benutzung des Netzwerks umfasst, dass die Befähigung des Clientcomputersystems auf ein Netzwerk zuzugreifen zumindest zeitweilig deaktiviert werde, **gekennzeichnet durch** die Schritte
- Empfangen (600-604) der Meldung direkt von der physikalischen Schicht in einem Logikmodul (300) des Netzwerkadapters, und
- in Antwort auf den Empfang der Meldung zeitweiliges Isolieren (622) des Mediaaccesscontrollers **durch** das Logikmodul von einem Betriebssystem, das auf dem Clientcomputersystem ausgeführt wird, so dass das Betriebssystem nicht mit dem Mediaaccesscontroller kommuniziert, wenn der Mediaaccesscontroller isoliert ist, wobei der Schritt des zeitweiligen Isolierens (622) des Mediaaccesscontrollers (232) von dem Betriebssystem das Isolieren des Mediaaccesscontrollers von einem internen Bus (208) des Clientcomputersystems (104) umfasst,
wodurch die Befähigung des Clientcomputersystems auf das Netzwerk zuzugreifen zumindest zeitweilig deaktiviert wird, wobei das Clientcomputersystem unfähig ist, Informationen unter Benutzung des Netzwerks zu übermitteln, während das Clientcomputersystem zeitweilig deaktiviert ist.

2. Verfahren nach Anspruch 1,
wobei die Meldung ein Befehlsfeld (416) umfasst, wobei das Logikmodul die Befähigung des Clientcomputersystems, auf das Netzwerk zuzugreifen, zeitweilig deaktiviert (622) entsprechend dem Befehlsfeld (620, 616).

3. Verfahren in einem Datenverarbeitungssystem, um es einem Servercomputersystem (100) zu ermöglichen, von ferne die Befähigung eines Clientcomputersystems (104) zu deaktivieren, auf ein Netzwerk (103, 106) zuzugreifen, das das Clientcomputersystem mit dem Servercomputersystem verbindet, wobei das Clientcomputersystem einen Netzwerkadapter (230) umfasst mit einer physikalischen Schicht (234) und einem Mediaaccesscontroller (232), wobei das Verfahren den Schritt des Übermittelns (500-508) einer Meldung an die physikalische Schicht durch das Servercomputersystem unter Benutzung des Netzwerks umfasst, dass die Befähigung des Clientcomputersystems auf ein Netzwerk zuzugreifen zumindest zeitweilig deaktiviert werde, **gekennzeichnet durch** die Schritte
- Empfangen (600-604) der Meldung direkt von der physikalischen Schicht in einem Logikmodul (300) des Netzwerkadapters, und
- in Antwort auf den Empfang der Meldung erzeugen (618) einer Zurücksetzung der physikalischen Schicht **durch** das Logikmodul, wobei die Zurücksetzung der physikalischen Schicht eine Befähigung der physikalischen Schicht, auf ein Netzwerk zuzugreifen, dauerhaft deaktiviert,
wodurch die Befähigung des Clientcomputersystems auf das Netzwerk zuzugreifen zumindest zeitweilig deaktiviert wird, wobei das Clientcomputersystem unfähig ist, Informationen unter Benutzung des Netzwerks zu übermitteln, während das Clientcomputersystem zeitweilig deaktiviert ist.

4. Verfahren nach Anspruch 3,
wobei die Meldung ein Befehlsfeld (416) umfasst, wobei das Logikmodul die Befähigung des Clientcomputersystems, auf das Netzwerk zuzugreifen, dauerhaft deaktiviert (622) entsprechend dem Befehlsfeld (620, 616).

5. Verfahren nach Anspruch 3 oder 4,
weiterhin umfassend den Schritt des Bedürfens eines Benutzers, um die Zurücksetzung der physikalischen Schicht aufzuheben vor einem Zulassen einer Reaktivierung der Befähigung des Clientcomputersystems, auf ein Netzwerk zuzugreifen.

6. Verfahren nach einem der Ansprüche 1 bis 5, weiterhin die folgenden Schritte umfassend:
- Übermitteln (500-508) einer Meldung durch das Servercomputersystem an das Clientcomputersystem unter Benutzung des Netzwerks, dass die Befähigung des Clientcomputersystems, auf das Netzwerk zuzugreifen, reaktiviert werde, und
- in Antwort auf einen Empfang der Meldung durch das Clientcomputersystem reaktivieren (626) der Befähigung des Clientcomputersystems, auf ein Netzwerk zuzugreifen, wobei das Clientcomputersystem fähig ist, Informationen unter Benutzung des Netzwerks zu übermitteln, während das Clientcomputersystem reaktiviert ist.

7. Verfahren nach Anspruch 6,
wobei der Schritt des Reaktivierens (626) der Befähigung des Clientcomputersystems, auf ein Netzwerk zuzugreifen, weiterhin den Schritt umfasst, eine Kommunikation zwischen dem Betriebssystem und dem im Clientcomputersystem enthaltenen Mediaaccesscontroller zu reaktivieren.

8. Verfahren nach Anspruch 7,
weiterhin die folgenden Schritte umfassend:
- Übermitteln (500-508) einer Meldung durch das Servercomputersystem an das Clientcomputersystem unter Benutzung des Netzwerks, dass die Befähigung des Clientcomputersystems, auf das Netzwerk zuzugreifen, initialisiert werde, und
- in Antwort auf einen Empfang der Meldung durch das Clientcomputersystem Initialisierung (630) der Befähigung des Clientcomputersystems, auf das Netzwerk zuzugreifen.

9. Verfahren nach Anspruch 8,
wobei der Schritt des Initialisierens (630) der Befähigung des Clientcomputersystems, auf das Netzwerk zuzugreifen, weiterhin den Schritt des Initialisierens des im Clientcomputersystem enthaltenen Mediaaccesscontrollers (232), auf das Netzwerk zuzugreifen, umfasst.

10. Datenverarbeitungssystem, um es einem Servercomputersystem (100) zu ermöglichen, von ferne die Befähigung eines Clientcomputersystems (104) zu deaktivieren, auf ein Netzwerk (103, 106) zuzugreifen, das das Clientcomputersystem mit dem Servercomputersystem verbindet, wobei das Clientcomputersystem einen Netzwerkadapter (230) umfasst mit einer physikalischen Schicht (234) und einem Mediaaccesscontroller (232), wobei das System das Servercomputersystem umfasst, das Code (500-508) ausführt, um eine Meldung an die physikalische Schicht unter Benutzung des Netzwerks zu übermitteln, dass die Befähigung des Clientcomputersystems, auf das Netzwerk zuzugreifen, zumindest zeitweilig deaktiviert werde, wobei der Netzwerkadapter weiterhin ein Logikmodul (300) umfasst zum Empfangen der Meldung direkt von der physikalischen Schicht und zum Isolieren des Mediaaccesscontrollers von einem Betriebssystem, das auf dem Clientcomputersystem ausgeführt wird, so dass das Betriebssystem nicht mit dem Mediaaccesscontroller kommuniziert, wenn der Mediaaccesscontroller isoliert ist, wobei das System Mittel umfasst, um den Mediaaccesscontroller (232) zeitweilig von dem Betriebssystem zu isolieren (622) umfassend das Isolieren des Mediaaccesscontrollers von einem internen Bus (208) des Clientcomputersystems (104).

11. System nach Anspruch 10,
wobei die Meldung ein Befehlsfeld (416) umfasst, wobei das Logikmodul Mittel umfasst zur zeitweiligen Deaktivierung (622) der Befähigung des Clientcomputersystems, auf das Netzwerk zuzugreifen, entsprechend dem Befehlsfeld (620, 616).

12. Datenverarbeitungssystem, um es einem Servercomputersystem (100) zu ermöglichen, von ferne die Befähigung eines Clientcomputersystems (104) zu deaktivieren, auf ein Netzwerk (103, 106) zuzugreifen, das das Clientcomputersystem mit dem Servercomputersystem verbindet, wobei das Clientcomputersystem einen Netzwerkadapter (230) umfasst mit einer physikalischen Schicht (234) und einem Mediaaccesscontroller (232), wobei das System das Servercomputersystem umfasst, das Code (500-508) ausführt, um eine Meldung an die physikalische Schicht unter Benutzung des Netzwerks zu übermitteln, dass die Befähigung des Clientcomputersystems, auf das Netzwerk zuzugreifen, zumindest zeitweilig deaktiviert werde, wobei der Netzwerkadapter weiterhin ein Logikmodul (300) umfasst zum Empfangen der Meldung direkt von der physikalischen Schicht und zum Isolieren des Mediaaccesscontrollers von einem Betriebssystem, das auf dem Clientcomputersystem ausgeführt wird, so dass das Betriebssystem nicht mit dem Mediaaccesscontroller kommuniziert, wenn der Mediaaccesscontroller isoliert ist, wobei das System Mittel umfasst zur Erzeugung einer Zurücksetzung der physikalischen Schicht, wobei die Zurücksetzung der physikalischen Schicht dauerhaft die Befähigung der physikalischen Schicht, auf ein Netzwerk zuzugreifen, deaktiviert, wodurch die Befähigung des Clientcomputersystems, auf das Netzwerk zuzugreifen, zumindest zeitweilig deaktiviert wird, wobei das Clientcomputersystem unfähig ist, Informationen unter Benutzung des Netzwerks zu übermitteln, während das Clientcomputersystem zeitweilig deaktiviert ist.

13. System nach Anspruch 12,
wobei die Meldung ein Befehlsfeld (416) umfasst, wobei das Logikmodul Mittel umfasst zur dauerhaften Deaktivierung (622) der Befähigung des Clientcomputersystems, auf das Netzwerk zuzugreifen, entsprechend dem Befehlsfeld (620, 616).

14. System nach Anspruch 12 oder 13,
wobei der Netzwerkadapter (230) eingerichtet ist, eines Benutzers zu bedürfen, um die Zurücksetzung (618) der physikalischen Schicht aufzuheben vor einer Reaktivierung der Verbindung zwischen dem Clientcomputerbetriebssystem und dem Netzwerk.

15. System nach einem der Ansprüche 10 bis 14, weiterhin umfassend
- Mittel zum Übermitteln einer Meldung an das Clientcomputersystem (104) unter Benutzung des Netzwerks (102, 106), dass die Befähigung des Clientcomputersystems, auf das Netzwerk zuzugreifen, reaktiviert werde, und
- Mittel zur Reaktivierung der Befähigung des Clientcomputersystems, auf ein Netzwerk zuzugreifen, in Antwort auf einen Empfang der Meldung durch das Clientcomputersystem, wobei das Clientcomputersystem fähig ist, Informationen unter Benutzung des Netzwerks zu übermitteln, während das Clientcomputersystem reaktiviert ist.

16. System nach Anspruch 15,
wobei das Clientcomputersystem Mittel umfasst zur Reaktivierung der Kommunikation zwischen dem im Clientcomputersystem enthaltenen Mediaaccesscontroller und dem Betriebssystem.

17. System nach einem der Ansprüche 10 bis 16, wobei das Servercomputersystem
- Mittel zum Übermitteln (500-508) einer Meldung (404, 416) an das Clientcomputersystem (104) unter Benutzung des Netzwerks (102, 106), dass die Befähigung des Clientcomputersystems, auf das Netzwerk zuzugreifen, initialisiert werde, und
- Mittel zur Initialisierung (630) der Befähigung des Clientcomputersystems, auf das Netzwerk zuzugreifen in Antwort auf einen Empfang der
Initialisierungsmeldung durch das Clientcomputersystem
umfasst.

18. System nach Anspruch 17,
wobei das Servercomputersystem Mittel umfasst zum Initialisieren des im Clientcomputersystem enthaltenen Mediaaccesscontrollers (232), auf das Netzwerk zuzugreifen.

19. System nach einem der Ansprüche 15 bis 18,
wobei:
i) die Meldung ein Datenpaket (404) ist, das Befehlsextensionen (416) in einem Netzwerkpaket (400) umfasst;
ii) der Netzwerkadapter (230) weiterhin ein Logikmodul (300) umfasst zum Empfangen der Befehlsextensionen direkt von der physikalischen Schicht (234), wobei das Logikmodul ausgestaltet ist, um in Antwort auf einen Empfang der Meldung den Mediaaccesscontroller (232) zeitweilig von dem Clientcomputerbetriebssystem (104) zu isolieren, so dass das Clientcomputerbetriebssystem nicht mit dem Mediaaccesscontroller kommuniziert, während der Mediaaccesscontroller isoliert ist.

20. System nach einem der Ansprüche 15 bis 18,
wobei:
i) die Meldung ein Datenpaket (404) ist, das Befehlsextensionen (416) in einem Netzwerkpaket (400) umfasst;
ii) der Netzwerkadapter (230) weiterhin ein Logikmodul (300) umfasst zum Empfangen der Befehlsextensionen direkt von der physikalischen Schicht (234), wobei das Logikmodul ausgestaltet ist, um in Antwort auf einen Empfang der Meldung eine Zurücksetzung der physikalischen Schicht zu erzeugen, wobei die Zurücksetzung der physikalischen Schicht die Befähigung der physikalischen Schicht, auf das Netzwerk (102, 106) zuzugreifen, dauerhaft deaktiviert.

21. System nach einem der Ansprüche 10 bis 20,
wobei das Clientcomputersystem (104) eine Stromversorgung (240) umfasst, die Mittel aufweist, um vollen normalen Systemstrom bereitzustellen, und die eine Hilfsstromleitung (AUX 5) aufweist, die Mittel aufweist, um dauerhaft Strom für die Strommanagementlogik (212) und für den Netzwerkadapter (230) bereitzustellen; wobei das Clientcomputersystem die Befähigung hat, auf ein Aufwachsignal vom Netzwerk zu antworten, auf das hin die Stromversorgung angeschaltet und das Clientcomputersystem hochgefahren wird.

22. Clientcomputersystem (104) zur Verwendung in einem Datenverarbeitungssystem nach einem der Ansprüche 10 bis 21.

23. Netzwerkadapter (230) zur Verwendung in einem Clientcomputersystem nach Anspruch 22.

## Revendications

1. Procédé utilisable dans un système de traitement de données pour permettre à un système de serveur informatique (100) d'arrêter à distance la capacité d'un système informatique de client (104) à accéder à un réseau (103, 106) qui relie le système informatique de client au système de serveur informatique, ledit système informatique de client comprenant un adaptateur de réseau (230) comportant une couche physique (234) et un contrôleur d'accès au support (232), le procédé comprenant l'étape dans laquelle le système de serveur informatique transmet (500-508) à la couche physique utilisant le réseau une indication lui signalant que la capacité du système informatique de client à accéder au réseau doit être au moins temporairement arrêtée, le procédé étant en outre **caractérisé par** les étapes consistant à :
- recevoir (600-604) directement l'indication provenant de la couche physique dans un module logique (300) de l'adaptateur de réseau, et
- en réponse à la réception de l'indication, que le module logique isole temporairement (622) le contrôleur d'accès au support d'un système d'exploitation exécuté par le système informatique de client, de manière à ce que le système d'exploitation ne communique pas avec le contrôleur d'accès au support quand le contrôleur d'accès au support est isolé, l'étape qui isole temporairement (622) le contrôleur d'accès au support (232) du système d'exploitation comprenant l'action d'isoler le contrôleur d'accès au support d'un bus interne (208) du système informatique de client (104),
ce qui a pour effet d'arrêter au moins temporairement la capacité du système informatique de client à accéder au réseau, le système informatique de client étant incapable de transmettre des informations en utilisant le réseau pendant que le système informatique de client est temporairement arrêté.

2. Procédé selon la revendication 1, l'indication comprenant un champ de commande (416), le module logique arrêtant temporairement (622) la capacité du système informatique de client à accéder au réseau selon le champ de commande (620, 616).

3. Procédé utilisable dans un système de traitement de données pour permettre à un système de serveur informatique (100) d'arrêter à distance la capacité d'un système informatique de client (104) à accéder à un réseau (103, 106) qui relie le système informatique de client au système de serveur informatique, ledit système informatique de client comprenant un adaptateur de réseau (230) comportant une couche physique (234) et un contrôleur d'accès au support (232), le procédé comprenant l'étape dans laquelle le système de serveur informatique transmet (500-508) à la couche physique utilisant le réseau une indication lui signalant que la capacité du système informatique de client à accéder au réseau doit être au moins temporairement arrêtée, le procédé étant en outre **caractérisé par** les étapes consistant à :
- recevoir (600-604) directement l'indication provenant de la couche physique dans un module logique (300) de l'adaptateur de réseau, et
- en réponse à la réception de l'indication, que le module logique commande (618) une remise à zéro de la couche physique, la remise à zéro de la couche physique arrêtant de façon permanente la capacité de la couche physique à accéder au réseau,
ce qui a pour effet d'arrêter au moins temporairement la capacité du système informatique de client à accéder au réseau, le système informatique de client étant incapable de transmettre des informations en utilisant le réseau pendant que le système informatique de client est temporairement arrêté.

4. Procédé selon la revendication 3, l'indication comprenant un champ de commande (416), le module logique arrêtant de façon permanente (618) la capacité du système informatique de client à accéder au réseau selon le champ de commande (620, 616).

5. Procédé selon la revendication 3 ou 4, comprenant en outre l'étape exigeant d'un utilisateur de retirer la remise à zéro de la couche physique avant de permettre la validation de la capacité du système informatique de client à accéder au réseau.

6. Procédé selon l'une quelconque des revendications 1 ou 5, comprenant en outre les étapes selon lesquelles :
- le système de serveur informatique transmet (500-508) au système informatique de client utilisant le réseau une indication lui signalant que la capacité du système informatique de client à accéder au réseau doit être validée ; et
- en réponse à la réception de l'indication par le système informatique de client, la validation (626) de la capacité du système informatique de client à accéder au réseau, le système informatique de client étant alors capable de transmettre des informations en utilisant le réseau pendant que le système informatique de client est validé.

7. Procédé selon la revendication 6, l'étape de validation (626) de la capacité du système informatique de client à accéder au réseau comprenant en outre l'étape de validation de la communication entre le système d'exploitation et le contrôleur d'accès au support incorporé dans le système informatique de client.

8. Procédé selon la revendication 7, comprenant en outre les étapes selon lesquelles :
- le système de serveur informatique transmet (500-508) une indication au système informatique de client utilisant le réseau lui signalant que la capacité du système informatique de client à accéder au réseau doit être initialisée ; et
- en réponse à la réception de l'indication par le système informatique de client, l'initialisation (630) de la capacité du système informatique de client à accéder au réseau.

9. Procédé selon la revendication 8, l'étape d'initialisation (630) de la capacité du système informatique de client à accéder au réseau comprenant en outre l'étape d'initialisation du contrôleur d'accès au support (232) incorporé dans le système informatique de client lui permettant d'accéder au réseau.

10. Système de traitement de données permettant à un système de serveur informatique (100) d'arrêter à distance la capacité d'un système informatique de client (104) à accéder à un réseau (102, 106) qui relie le système informatique de client au système de serveur informatique, le système informatique de client comprenant un adaptateur de réseau (230) comportant une couche physique (234) et un contrôleur d'accès au support (232), le système comprenant l'exécution d'un code (500-508) par le système de serveur informatique pour transmettre une indication à la couche physique utilisant le réseau lui signalant que la capacité du système informatique de client à accéder au réseau doit être au moins temporairement arrêtée, l'adaptateur de réseau comprenant en outre un module logique (300) pour recevoir directement l'indication de la couche physique et isoler le contrôleur d'accès au support d'un système d'exploitation exécuté par le système informatique de client, de manière à ce que le système d'exploitation ne communique pas avec le contrôleur d'accès au support quand le contrôleur d'accès au support est isolé, le système comprenant des moyens pour commander l'isolation temporaire (622) du contrôleur d'accès au support (232) du système d'exploitation y compris l'isolation du contrôleur d'accès au support d'un bus interne (208) du système informatique de client (104).

11. Système selon la revendication 10, l'indication comprenant un champ de commande (416), le module logique comprenant des moyens permettant d'arrêter temporairement (622) la capacité du système informatique de client à accéder au réseau selon le champ de commande (620, 616).

12. Système de traitement de données permettant à un système de serveur informatique (100) d'arrêter à distance la capacité d'un système informatique de client (104) à accéder à un réseau (102, 106) qui relie le système informatique de client au système de serveur informatique, le système informatique de client comprenant un adaptateur de réseau (230) comportant une couche physique (234) et un contrôleur d'accès au support (232), le système comprenant l'exécution d'un code (500-508) par le système de serveur informatique pour transmettre une indication à la couche physique utilisant le réseau lui signalant que la capacité du système informatique de client à accéder au réseau doit être au moins temporairement arrêtée, l'adaptateur de réseau comprenant en outre un module logique (300) pour recevoir directement l'indication de la couche physique et isoler le contrôleur d'accès au support d'un système d'exploitation exécuté par le système informatique de client, de manière à ce que le système d'exploitation ne communique pas avec le contrôleur d'accès au support quand le contrôleur d'accès au support est isolé, le système comprenant des moyens pour commander une remise à zéro de la couche physique, la remise à zéro de la couche physique arrêtant de façon permanente la capacité de la couche physique à accéder au réseau, ce qui a pour effet d'arrêter au moins temporairement la capacité du système informatique de client à accéder au réseau, le système informatique de client étant incapable de transmettre des informations en utilisant le réseau pendant que le système informatique de client est temporairement arrêté.

13. Système selon la revendication 12, l'indication comprenant un champ de commande (416), le module logique comprenant des moyens permettant d'arrêter de façon permanente (618) la capacité du système informatique de client à accéder au réseau selon le champ de commande (620, 616).

14. Système selon la revendication 12 ou 13, l'adaptateur de réseau (230) étant configuré de manière à exiger qu'un utilisateur retire la remise à zéro de la couche physique (618) avant de permettre la validation de la communication entre le système informatique de client et le réseau (102, 106).

15. Système selon l'une quelconque des revendications 10 à 14, comprenant en outre :
- des moyens pour transmettre une indication au système informatique de client (104) utilisant le réseau (102, 106) lui signalant que la capacité du système informatique de client à accéder au réseau doit être validée ; et
- des moyens pour, en réponse à la réception de l'indication par le système informatique de client, valider la capacité du système informatique de client à accéder au réseau, le système informatique de client étant alors capable de transmettre des informations en utilisant le réseau pendant que le système informatique de client est validé.

16. Système selon la revendication 15, le système informatique de client comprenant des moyens pour valider la communication entre le contrôleur d'accès au support incorporé dans le système informatique de client et le système d'exploitation.

17. Système selon l'une quelconque des revendications 10 à 16, le système de serveur informatique comprenant :
- des moyens pour transmettre (500-508) une indication (404, 416) au système informatique de client (104) utilisant le réseau (102, 106) lui signalant que la capacité du système informatique de client à accéder au réseau doit être initialisée et
- des moyens pour, en réponse à la réception de l'indication d'initialisation par le système informatique de client, initialiser (630) la capacité du système informatique de client à accéder au réseau.

18. Système selon la revendication 17, le système de serveur informatique comprenant des moyens pour initialiser le contrôleur d'accès au support (232) incorporé dans le système informatique de client pour accéder au réseau.

19. Système selon l'une quelconque des revendications 15 à 18, dans ledit système :
i) l'indication est un paquet de données (404) incorporant des extensions de commande (416) dans un paquet de réseau (400) ;
ii)l'adaptateur de réseau (230) comprend en outre un module logique (300) pour recevoir les extensions de commande directement de la couche physique (234), le module logique étant configuré pour, en réponse à la réception de l'indication, isoler temporairement le contrôleur d'accès au support (232) du système informatique de client (104), de manière à ce que le système informatique de client ne communique pas avec le contrôleur d'accès au support quand le contrôleur d'accès au support est isolé.

20. Système selon l'une quelconque des revendications 15 à 18, dans ledit système :
i) l'indication est un paquet de données (404) incorporant des extensions de commande (416) dans un paquet de réseau (400) ;
ii)l'adaptateur de réseau (230) comprend en outre un module logique (300) pour recevoir les extensions de commande directement de la couche physique (234), le module logique étant configuré pour, en réponse à la réception de l'indication, commander une remise à zéro de la couche physique, la remise à zéro de la couche physique arrêtant de façon permanente la capacité de la couche physique à accéder au réseau (102, 106).

21. Système selon l'une quelconque des revendications 10 à 20, le système informatique de client (104) comprenant une alimentation électrique (240) incorporant des moyens pour fournir la pleine alimentation normale au système et une alimentation auxiliaire (AUX 5) incorporant des moyens pour fournir en permanence une alimentation à la logique de gestion de l'économie d'énergie (212) et à l'adaptateur de réseau (230) ; ce par quoi le système informatique de client a la capacité de réagir à un signal de réveil provenant du réseau, pour qu'en réponse l'alimentation électrique soit rallumée et que le système informatique de client soit remis sous tension.

22. Système informatique de client (104) destiné à l'utilisation dans un système de traitement de données selon l'une quelconque des revendications 10 à 21.

23. Adaptateur de réseau (230) destiné à l'utilisation dans un système informatique de client (104) selon la revendication 22.
